# EUROPEAN PATENT APPLICATION

(11) **EP 4 199 008 A1**
(43) Date of publication of application: **21.06.2023**
(21) Application number: 21306827.3
(22) Date of filing: 17.12.2021
(51) Int. Cl.: H01B 9/02, F16L 11/22, H01B 7/18, H05B 3/56, H01B 7/04, F16L 53/30

(54) **POWER CABLE**

(71) Applicant: Nexans, 92400 Courbevoie (FR)
(72) Inventor: IVERSEN, Oyvind, 1406 SKI (NO)
(74) Representative: Ipsilon

(57) **Abstract**

A power cable comprising at least one cable core for transfer of electric power, a set of elongate elements and a protective sheath encapsulating the at least one cable core and the elongate elements, such that capacitive currents, arising in the power cable when the at least one cable core conducts electric power, may be dissipated or drained off.

## Description

### Field of the invention

The present invention relates a to power cables having a new structure to dissipate or drain off capacitive currents.

### Background

It is well known that when a voltage source is applied to a conductor, the capacitance between the conductor and the environment will result in a (capacitive) current flow. The capacitive current that arises is called charging current.

In power cables, the discharge of these charging currents may damage the structure of the power cables or other cable elements within the cable and reduces the life cycle of said cable. Changing cables are costly and time-consuming processes that should be as rare as possible so as to reduce downtime in the systems of interest.

Also, without a clear and defined path to ground for the capacitive charging current, there will be a voltage build-up across the surrounding layer.

For the purpose of testing a cable during Factory Acceptance Test (FAT), the cable will not be in salt water and the importance to have a defined path to ground for charging currents is important to avoid damage to the cable.

EP 3319092 discloses a power umbilical comprising at least one power cable to transfer large amounts of electric energy/power, a set of elongate profile elements, laying at least partly around and between the power cables, which are collectively collected into a twisted bundle by means of a laying and closing operation, and a protective sheath encapsulating the at least power cable and the elongate profile elements. The at least one of the elongate profile elements, is made of a semiconducting material, said semiconducting material being able to drain off, or dissipate, capacitive currents arising in the power umbilical when the at least one power cable conducts large amounts of electric energy/power, said elongate profile elements comprising longitudinally channels adapted to communicate with radial extending holes or slits in the profile elements and through the protective sheath such that when the water is filling the channels, the holes or slits are transporting the capacitive currents into the surrounding sea water.

However, known structures all have their challenges and limitations because, at the same time, they need to handle capacitive charging currents, provide a mechanical robust solution, be cost efficient, ensure a stable configuration for a multi-core cable, etc.

The present invention attempts to solve these challenges, or at least to improve on existing solutions.

### SUMMARY OF THE INVENTION

The present invention is defined by the appended claims and in the following:
In a first aspect, the invention relates to a power cable comprising at least one cable core for transfer of electric power, a set of elongate elements and a protective sheath encapsulating the at least one cable core and the elongate elements,
wherein the first elongate elements are arranged at least partly around the at least one cable core,
wherein at least one first elongate elements is at least partially covered by a semiconducting layer,
and the semiconducting layer of the at least one first elongate element forms at least a part of a continuous conducting path between the cable core and the protective semiconductive sheath,
such that capacitive currents, arising in the power cable when the at least one cable core conducts electric power, may be dissipated or drained off.

A cable core comprises a conductor made of metal. The cable core is normally surrounded with an insulation system comprising an inner semiconducting layer, an electrical insulating layer and outer semiconducting layer.

An elongate element is an object having a longitudinal axis and a cross section perpendicular to said axis. The elongate element is configured to fit in a power cable. The cross section may be of any suitable shape. Elongate elements having different cross sections may be used in the same cable. Typical example of elongate elements are fillers and profile elements. Here the term "profile element" is used to describe elongate elements having a non-circular cross section adapted to at least partially fill the space between the at least one cable core surrounded by an insulation system and the protective sheath.

In an embodiment of the power cable according to the first aspect of the invention, the first elongate elements may be made of material having an increased Shore A hardness compared to the semiconductive material.

In another embodiment of the power cable, the first elongate elements can be made of an insulating material. In addition, they may not comprise a semiconducting additive, for example particulate carbon, silver or aluminum.

In an embodiment of the power cable, the first elongate element made in a material being less compressible than the material of the semiconducting layer In another embodiment of the power cable, the first elongate elements may be made of an insulating material. In other words, the first elongate elements are not made of semiconducting material or are not made of an insulating material rendered semiconducting, for example by addition of a semiconducting additive. Here it is the semiconductive layer that alone provides for the drain off of capacitive currents.

In another embodiment of the power cable, the first elongate elements are made of a polypropylene- or polyethylene-based material.

The polyethylene-based polymer may in one example embodiment be made of a low density polyethylene (LDPE), a linear low density polyethylene (LLDPE), a medium density polyethylene (MDPE), or a high density polyethylene (HDPE) constituted of a copolymer of ethylene with one or more polar monomers of acrylic acid, methacrylic acid, glycidyl methacrylate, maleic acid, or maleic anhydride.

The polypropylene-based polymer may in one example embodiment be made of a low density polypropylene (LDPP), a linear low density polypropylene (LLDPP), a medium density polypropylene (MDPP), or a high density polypropylene (HDPP) constituted of a copolymer of propylene with one or more polar monomers of acrylic acid, methacrylic acid, glycidyl methacrylate, maleic acid, or maleic anhydride.

Examples of suitable propylene or polyethylene-based polymers include, but are not limited to: copolymer of propylene or ethylene and ethyl acrylate or similar acrylates; copolymer of propylene or ethylene and ethyl acrylic acid, methacrylic acid or similar; copolymer of propylene or ethylene and glycidyl methacrylate or similar epoxy-based monomer such as 1,2-epoxy-1-butene or similar; or copolymer of propylene or ethylene and maleic-anhydride, or similar.

In another embodiment of the power cable, at least one first elongate element may comprise at least an internal longitudinal channel, adapted to be filled with water.

In another embodiment of the power cable, each first elongate element may comprise at least an internal longitudinal channel, adapted to be filled with water.

In another embodiment of the power cable, 25% of the surface of at least one first elongate elements may be covered by the layer made of a semiconducting material.

In another embodiment of the power cable, 50% of the surface of at least one first elongate elements may be covered by the layer made of a semiconducting material.

In another embodiment of the power cable, 75% of the surface of at least one first elongate elements may be covered by the layer made of a semiconducting material.

In another embodiment of the power cable, at least one first elongate elements may be fully covered by the layer made of a semiconducting material.

In another embodiment of the power cable, 25% of the surface of each first elongate elements may be covered by the layer made of a semiconducting material.

In another embodiment of the power cable, 50% of the surface of each first elongate elements may be covered by the layer made of a semiconducting material.

In another embodiment of the power cable, 75% of the surface of each first elongate elements may be covered by the layer made of a semiconducting material.

In another embodiment of the power cable, each first elongate elements may be fully covered by the layer made of a semiconducting material.

In another embodiment of the power cable, the semiconductive layer may be made of a polypropylene- or polyethylene-based material, made semiconducting. The polypropylene- or polyethylene-based polymer may in one exemplary embodiment be made electrically semiconducting by addition and homogenisation of 4 to 40 weight% particulate carbon, silver or aluminum in the polymer mass to enable carrying away capacitive charges.

Examples of suited particulate carbon include but are not limited to; comminuted petrol coke, comminuted anthracite, comminuted charcoal, carbon black, carbon nanotubes, etc.

In another embodiment, the particulate carbon may be carbon black.

In another embodiment, the semiconducting layer may be made of semiconducting polymers, such as polypyrrole (PPy), polyaniline, polydopamine (PDA), polytrimethylene terephthalate (PTT) or any combination thereof.

The term "semiconducting" as used herein, refers to middle level of electric conductivity, i.e. an electric conductivity falling between the electric conductivity of an electric conductor and an electric insulator.

In another embodiment, the semiconductive layer may be in the form of a tape, wherein the tape comprises an adhesive layer and a semiconducting layer.

In another embodiment, the semiconductive layer may have been coextruded with the first elongate element.

In another embodiment, the power cable may comprise two or more cable cores.

In another embodiment, the power cable may comprise two, three, four or six cable cores.

In another embodiment, the power cable may comprise two or more cable cores and may further comprise an second elongate element, between the two or more cable cores, wherein the second elongate element is at least partially covered by a semiconducting layer; such that there is a conductive path of semiconducting material between the two or more cable cores.

In another embodiment, the power cable may comprise two or more cable cores and may further comprise a plurality of second elongate elements, between the two or more cable cores, wherein the plurality of second elongate elements are at least partially covered by a semiconducting layer; such that there is a conductive path of semiconducting material between the two or more cable cores.

In another embodiment, the second elongate element may be made of an insulating material.

In another embodiment, the second elongate element may be made of a polypropylene- or polyethylene-based material.

In another embodiment, the second elongate element may be fully covered by a semiconducting layer.

In another embodiment, the semiconducting layer of the second elongate element may be made of semiconducting polymers, such as polypyrrole (PPy), polyaniline, polydopamine (PDA), polytrimethylene terephthalate (PTT) or any combination thereof.

In another embodiment, the power cable may comprise a fibre optic cable with semiconductive sheets, with or without steel armour.

### Short description of the drawings

In the following description this invention will be further explained by way of exemplary embodiments shown in the drawings:
Fig. 1 shows a transverse cross-sectional view through a power cable according to the invention.
Fig. 2 shows an example of charging current flow in semiconducting layer of the elongate elements.
Fig.3 shows a transverse cross-sectional view through a 3-core power cable according to the invention.
Fig. 4 shows a series of second elongate element and their placement between cable cores.

### Detailed description of the invention

The invention relates to a novel structure for power cable 1 that is particularly relevant for
- Un-armoured cables such as for DEH piggyback or other single core or 3-cores with none or limited metallic armour.
- Armoured cable intended for dynamic operation
- Cable where the armour encompassing the internal elements is made of magnetic or non-magnetic metal.
- Cable there above-mentioned armour is non-homogenous and contains "armour" made of polymers with the same shape as the metal armour wires

For the purpose of testing a cable during Factory Acceptance Test (FAT), the cable will not be in salt water and the importance to have a defined path to ground for charging currents is important to avoid damage to the cable. A path from the insulated core and to ground made up by semiconductive layers will prevent damages to the cable and remove need to submerge the cable in salt water for such test. Having the said semiconductive path made up by a skin or lip will both be more cost efficient and more mechanical robust than profile elements purely made up by semiconductive material.

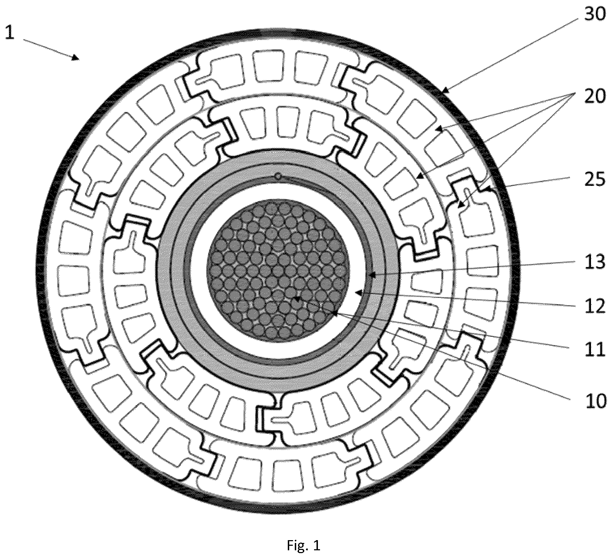

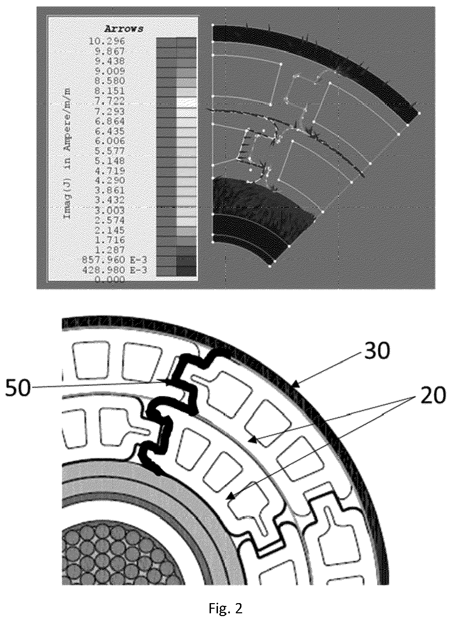

Fig.1 shows a first embodiment of the invention. In this embodiment, the inventive power cable 1 comprises a cable core 10, an insulation system 11;12;13, a set of first elongate element 20, and a protective sheath 30. The cable core 10 is surrounded by the insulation system 11;12;13. The insulation system typically comprises a first layer 11 made of a semiconducting material; a second layer 12 made of an insulating material surrounding the first layer 11; and a third layer 13 made of a semiconducting material surrounding the second layer 12. The protective sheath 30 surrounds the cable core 10, the insulation system 11;12;13 and the set of first elongate element 20. The set of first elongate element 20 is made of a stiff material suitable for mechanical loads as point load, impact force, abrasion etc. In addition, at least one of the first elongate elements 20 is at least partially (skin / section / lip) covered by a semiconducting layer 25 such that capacitive currents arising in the power cable 10 when the at least one cable core conducts electric power may be dissipated or drained off. This advantageous effect is illustrated in fig. 2. Fig. 2 shows an example of charging current flow in semiconducting layer 25 of the first elongate elements 20.

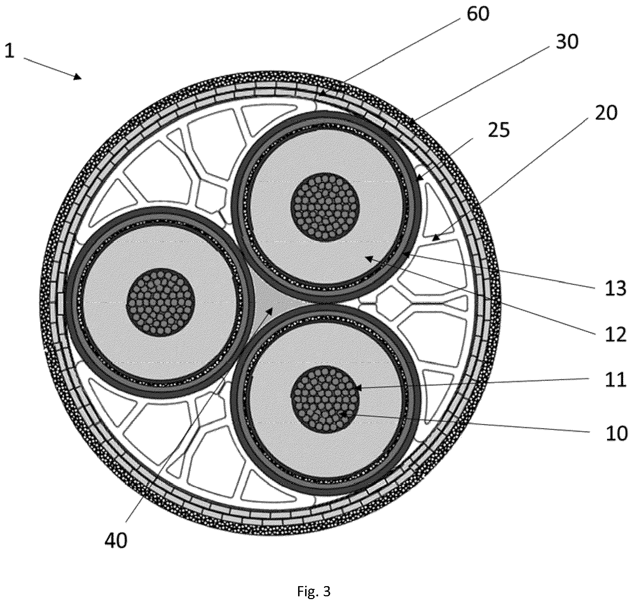

The skilled person will understand that there are different possibilities for covering the at least one first elongate element 20, depending on the geometry of each first elongate element 20, on the number of covered element and on the assembly in the power cable. Some of these possibilities are illustrated in Fig. 1 and 3. However, these illustrations are not limiting for the invention.

Typically, the first elongate elements 20 may be fully covered by a semiconducting layer 25 or covered by a semiconducting layer 25 on a side or on an end part. A combination of first elongate element 20 having different semiconducting layers 25 may also be used to create at least a suitable continuous path between the insulation system 13 and the protective sheath 30 such that capacitive currents arising in the power cable 1 when the at least one cable core 10 conducts electric power may be dissipated or drained off.

The power cable 1 may also comprise any other element traditionally found in power cables. The power cable 1 may typically include steel tubes and fibre optic cables as well as small power cables or "quads" as they often are referred to.

The first elongate elements 20 may have different size and shape, independently from one another. Fig.1 and Fig.3 show examples of first elongate elements 20 that are profile elements. The cross section of the profile elements have shapes and size (relative to the total power cable size) that are suitable to fit in the power cable 1 while surrounding the cable core(s) 10 and their respective insulation systems 11, 12, 13. In Fig 1 the first elongate elements 20 are in the shape of a tubular sector (i.e. a tubes having a circular sector as a base). End parts of the first elongate elements are shown with an interlocking system to further stabilize the total structure. Two series of first elongate elements 20 of similar shape but different size are shown. In Fig.3 the first elongate elements 20 is in a shape of a cylindrical sector (i.e. a cylinder having a circular sector as a base), where of the side of the sector are of concave shape so that the cable cores 10 including their insulation systems 11,12,13 may rest on the concave surface of the first elongate element 20.

In these examples the first elongate elements 20 comprise multiple internal longitudinal channels, adapted to be filled with water; i.e. these channels are adapted to communicate with radial extending holes or slits in the first elongate elements 20 and through the protective sheath 30 such that when the water is filling the channels, the holes or slits are transporting the capacitive currents into the surrounding sea water.

The first elongate elements 20 will preferably be made of material having an increased Shore A hardness compared to the semiconductive material.

There are multiple ways the semiconductive layer 25 may be applied on the first elongate elements 20. For example, they may be prepared via
- co-extrusion of the semiconductive layer to the first elongate elements 20
- adding a semiconductive tape on the first elongate elements 20
- adding a semiconductive section or lip on the first elongate elements 20 by co-extrusion

These methods are suitable for partial and total coverage of the first elongate elements 20.

In Fig. 3, another embodiment of the invention, comprising three cable cores 10 is illustrated. In this embodiment, in addition to all the elements present in the first embodiment of the invention, there may be at least a second elongate element 40 (that may be different from the first elongate element 20) used to both distribute the mechanical load and reinforce the draining properties of the power cable.

In a preferred embodiment, the second elongate element 40 is a semiconductive elongate center element that will both allow for better mechanical load distribution and reinforce the draining properties. The second elongate element 40 will allow to combine the draining of capacitive charging currents.

In an example embodiment the second elongate element has a cylinder-like shape having a triangular cross section, each of the side of the triangle being of concave shape so that the cable cores including their insulation system may rest on the concave surface of the second elongate element.

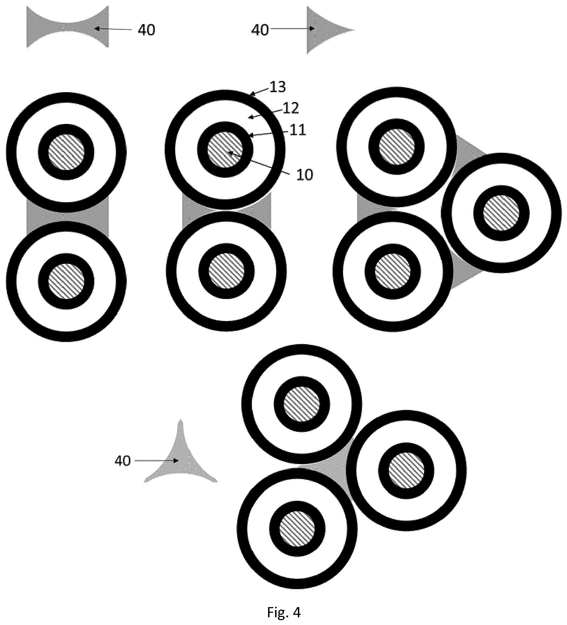

Depending on the number of cable cores 10 in the power cable 1, the number and geometry of the second elongate elements 40 will vary. Fig. 4 shows some alternatives for power cable 1 having 2 or 3 cable cores 10. However, this type of second elongate elements 40 may also be used in power cables 1 having other number of cable cores, especially four or six.

Preferably, this second elongate element 40 is made of a semiconductive material.

Even more preferably, this second elongate element 40 is made of a rigid material at least partially covered with a semiconductive layer 45.

The outer semiconductive sheath 30 may be replaced by yarn made of polymer covered in bitumen when the cable is intended for static configuration. Said polymer yarn is not watertight and will ensure a channel for the charging currents.

The embodiment of the power cable 10 illustrated on Fig. 3 further comprises armouring 60 surrounding the first elongate elements 20 and surrounded by the outer semiconductive sheath 30.The inventive structure is advantageous because it allows for a designed and controlled dissipation or drain of the capacitive currents, whilst providing a mechanical robust solution, that ensures a stable configuration, especially for multiple cable umbilicals.

Another advantage of the solution is that is works both in dry (at the factory, and for testing) and wet (in sea water, in service) environment.

## Claims

1. A power cable (1) comprising at least one cable core (10) for transfer of electric power, a set of first elongate elements (20) and a protective sheath (30) encapsulating the at least one cable core (10) and the first elongate elements (20),
wherein the first elongate elements (20) are arranged at least partly around the at least one cable core (10),
wherein at least one of the first elongate elements is at least partially covered by a semiconducting layer (25),
and the semiconducting layer (25) of the at least one first elongate element (20) forms at least a part of a continuous conducting path (50) between the cable core and the protective semiconductive sheath (30),
such that capacitive currents, arising in the power cable when the at least one cable core conducts electric power, may be dissipated or drained off.

2. A power cable (1) according to claim 1 or 2, wherein the first elongate elements (20) are made of an insulating material.

3. A power cable (1) according to claim 2, wherein the first elongate elements (20) are made of a polypropylene- or polyethylene-based material.

4. A power cable (1) according to any of the previous claims, wherein at least one first elongate element (20) is a profile element.

5. A power cable (1) according to any of the previous claims, wherein at least one first elongate element (20) comprises at least an internal longitudinal channel, adapted to be filled with water.

6. A power cable (1) according to any of the previous claims, wherein at least one first elongate elements (20) is fully covered by the semiconducting layer (25).

7. A power cable (1) according to any of the previous claims, wherein the semiconducting layer (25) is made of polypropylene- or polyethylene-based material, made semiconducting by addition and homogenisation of 4 to 40 weight% particulate carbon.

8. A power cable (1) according to any of the previous claims, wherein the semiconducting layer (25) is in the form of a tape, wherein the tape comprises an adhesive layer and a semiconducting layer

9. A power cable (1) according to any of the previous claims, wherein the semiconducting layer (25) has been coextruded with the first elongate element (20).

10. A power cable (1) according to any of the previous claims, comprising two or more cable cores (10).

11. A power cable (1) according to claim 10, further comprising a second elongate element (40), between the two or more cable cores (10), wherein the second elongate element (40) is at least partially covered by a semiconducting layer (45); such that there is a conductive path of semiconducting material between the two or more cable cores (10).

12. A power cable (1) according to claim 11, wherein the second elongate element (40) is made of an insulating material.

13. A power cable (1) according to claim 12, wherein the second elongate element (40) is made of polypropylene- or polyethylene-based material

14. A power cable (1) according to any one of claims 11-13, wherein the second elongate element (40) is fully covered by a semiconducting layer.

15. A power cable (1) according to any one of claims 11-14, wherein the semiconducting layer (45) of the second elongate element (40) is made of polypyrrole (PPy), polyaniline, polydopamine (PDA), polytrimethylene terephthalate (PTT) or any combination thereof.
